# EUROPÄISCHE PATENTANMELDUNG

(11) **EP 1 249 801 A1**
(43) Veröffentlichungstag der Anmeldung: **16.10.2002**
(21) Anmeldenummer: 01109180.8
(22) Anmeldetag: 12.04.2001
(51) Int. Cl.: G07F 7/10, H04M 17/00

(54) **Differenziertes Schwellwertverhalten von Prepaid-Diensten**

(71) Anmelder: SIEMENS AKTIENGESELLSCHAFT, 80333 München (DE)
(72) Erfinder: Hausmann, Ruediger, Dr., 82377 Penzberg (DE); Moritz, Peter, 85540 Haar (DE)

(57) **Zusammenfassung**

Verfahren zur schwellwertbezogenen Steuerung mindestens eines Dienstes in einem Daten- bzw. Telekommunikationssystem, mit folgenden Verfahrensschritten: a) Einstellen mindestens eines Schwellwertes für ein vorausbezahltes Guthaben zur Vergütung des Dienstes; b) Einstellen mindestens einer Aktion, insbesondere einer Steuerung des Dienstumfanges, im Rahmen des Dienstes, welche bei diesem Schwellwert ausgelöst werden soll; c) Signalisieren des Über- bzw. Unterschreitens des oder eines Schwellwertes; und d) Auslösen der Aktion in Ansprechen auf das Signal.

## Beschreibung

Die Erfindung betrifft ein Verfahren nach dem Oberbegriff des Anspruches 1.

Vorausbezahlte Dienste, insbesondere Dienste in einem Daten- bzw. Telekommunikationssystem, sind auch unter dem Namen Prepaiddienste bekannt. Dabei wird von dem Nutzer ein elektronisches Guthaben z. B. durch bargeldlose Überweisung oder durch Barkauf einer Telefonkarte (Prepaid-Karte) bei einem Dienstbetreiber aufgebaut. Die dabei gebuchten Dienste des Dienstbetreibers können dann bargeldlos von jedem tonwahlfähigen Telefon, aus einer Telefonzelle, im Hotel usw. über eine kostenfreie Servicenummer vom Nutzer angewählt und z. B. durch Eingabe einer Nutzeridentifkation genutzt werden. Die Nutzung solcher Dienste ist auch von einem Mobiltelefon aus möglich, wobei den Dienstbetreibern durch Vorauszahlung der Dienstvergütungen entsprechend attraktive Tarifgestaltungen möglich sind. Üblicherweise werden auf die Bedürfnisse der Benutzer abgestimmte Tarifmodelle, z. B. für die bevorzugte Nutzung von Auslands- oder Inlandsverbindungen, Orts- oder Ferngesprächen etc., angeboten.

Der Umfang der angebotenen Dienste erstreckt sich dabei nicht nur auf die Sprachübermittlung mittels Fest- oder Mobiltelefon, sondern auch auf textbasierte Kommunikationsdienste wie E-Mail oder SMS (Short Message Service). Darüberhinaus werden Dienste wie Voice-Mail (Anrufbeantworterfunktion), Internetzugang (WAP-Handy, Internet-Rechner) oder vergünstigte Dienstleistungen, wie Reiseauskunft, Telefonauskunft u. ä., angeboten.

Die Vorteile der Nutzung eines solchen Dienstleistungsangebotes haben bislang zu einer steigenden Anzahl von Nutzern geführt. Nachteilig an dem bisherigen System ist allerdings, daß bei Erschöpfung des Guthabens bei noch laufender Nutzung eines Dienstes der Anschluß gesperrt wurde, so daß dem Nutzer eine rechtzeitige Aufstockung seines elektronischen Guthabens nicht mehr möglich war. Dies ist für einen Nutzer umso weniger akzeptabel, als die Sperrung während eines wichtigen in Anspruch genommenen Dienstes, z. B. eines dringenden Auslandsgespräches, eintreten und schwerwiegende Folgen haben kann.

Es ist Aufgabe der vorliegenden Erfindung, ein Verfahren bereitzustellen, welches eine flexible Reaktion auf die Guthaben-Entwicklung bei im Voraus bezahlten Diensten zuläßt.

Diese Aufgabe wird durch ein Verfahren der in Rede stehenden Art mit den Verfahrensschritten a) Einstellen mindestens eines Schwellwertes für ein vorausbezahltes Guthaben zur Vergütung des Dienstes; b) Einstellen mindestens einer Aktion, insbesondere einer Steuerung des Dienstumfanges, im Rahmen des Dienstes, welche bei diesem Schwellwert ausgelöst werden soll; c) Signalisieren des Über- bzw. Unterschreitens des oder eines Schwellwertes; und d) Auslösen der Aktion in Ansprechen auf das Signal gelöst.

Ein Kerngedanke des erfindungsgemäßen Verfahrens besteht darin, eine differenzierte Entscheidung beim Erreichen einer (speziell unteren) Guthabenschwelle eines elektronischen Guthabens zugunsten einer flexiblen Reaktion des Nutzers zu realisieren.

Eine flexible Reaktion wird insbesondere dann ermöglicht, wenn ein Schwellwert zugunsten einer Anzahl von Schwellwerten aufgelöst wird, welchen schließlich jeweils wenigstens eine Aktion zugeordnet ist. Die dadurch erzielten Möglichkeiten der Flexibilisierung des Schwellwertverhaltens eines im Voraus bezahlten Dienstes lassen es zu, daß der Nutzer nunmehr rechtzeitig und auf seine speziellen Bedürfnisse abgestimmt eine Wiederaufladung seines elektronischen Guthabens vornehmen oder die Inanspruchnahme eines Dienstes geordnet beenden kann.

Vorteilhafte Weiterbildungen des Verfahrens sind in den Unteransprüchen 2 bis 12 angegeben.

In bevorzugter Weise umfaßt die beim Erreichen eines Schwellwertes ausgelöste Aktion das Aktivieren oder Deaktivieren des oder eines zugeordneten Dienstes. So können z. B. beim Erreichen eines oberen Schwellwertes zunächst besonders kostenintensive Dienste ausgeschaltet werden, um noch eine möglichst lange Bereitstellung kostengünstigerer Dienste zu gewährleisten. Erst bei Erreichen einer unteren Guthabensschwelle wird schließlich der Anschluß gesperrt.

Ein besonderer Vorteil wird dadurch erreicht, daß die bei Erreichen eines Schwellwertes ausgelöste Aktion das Ändern von Dienstparametern, insbesondere der Vergebührung, der Tarifierung oder der Dienstgüte, umfaßt. Dadurch wird das bloße Aktivieren oder Deaktivieren eines Dienstes aufgelöst zugunsten einer wesentlich differenzierteren Handhabung der Vergütungsmodalitäten. So wäre z. B. die Nutzung eines Dienstes bei Erreichen eines oberen Schwellwertes noch bei geringen monatlichen Gebühren und einem verhältnismäßig günstigen Tarif möglich, während bei Unterschreiten dieses Schwellwertes dieser Tarif nicht mehr angeboten wird oder die Dienstgüte, z. B. die Möglichkeit zur Führung von Auslandsgesprächen, eingeschränkt wird. Eine derartige Einschränkung von Dienstparametern über eine Anzahl von Schwellwerten in Richtung eines unteren Schwellwertes führt dazu, daß der Nutzer rechtzeitig zur Auffüllung seines elektronischen Guthabens motiviert wird.

Beim Einstellen mindestens eines Schwellwertes für ein Guthaben erfolgt die Wahl des Schwellwertes in bevorzugter Weise in Abhängigkeit der Nutzerdaten, insbesondere des vom Nutzer gebuchten Dienstumfanges und/oder der Höhe des vorausbezahlten Guthabens. So kann z. B. für einen Nutzer mit einem hohen vorausbezahlten Guthaben und einem gebuchten Dienstumfang, welcher nicht nur Telefon-, sondern auch Internetdienste umfaßt, ein oberer Schwellwert zum Auslösen dienstumfangseinschränkender Aktionen wesentlich niedriger liegen, als für einen Nutzer mit einem niedrigen vorausbezahlten Guthaben und einem von vornherein sehr eingeschränkten gebuchten Dienstumfang in Form eines reinen Telefondienstes.

Bevorzugt erfolgt auch die Wahl der bei Erreichen eines Schwellwertes ausgelösten Aktion in Abhängigkeit von Nutzerdaten, insbesondere des vom Nutzer gebuchten Dienstumfangs und/oder des vorausbezahlten Guthabens. So kann beim Einstellen mindestens einer Aktion im Rahmen des Dienstes, welche bei einem Schwellwert ausgelöst werden soll, für einen Nutzer mit einem geringen vorausbezahlten Guthaben bei diesem Schwellwert bereits eine Deaktivierung z. B. des gebuchten Internetdienstes und die Einschränkung der Speichergröße für SMS-Nachrichten erfolgen, während bei einem Nutzer mit einem erheblich höheren vorausbezahlten Guthaben bei Erreichen des gleichen Schwellwertes nur eine Änderung der Dienstparameter, z. B. des zugrundegelegten Ferngesprächtarifes, erfolgt. Hier wird der Nutzer frühzeitig zum Aufbau eines für hochwertige Dienste und eine "moderate" Reaktion bei Schwellwertunterschreitung ausreichenden elektronischen Guthabens motiviert.

Ein weiterer Vorteil wird dadurch erzielt, daß nach dem Einstellen mindestens einer Aktion im Rahmen des Dienstes, welche bei einem Schwellwert ausgelöst werden soll, eine zusätzliche Bedingung eingestellt wird, deren Erfülltsein zum Auslösen der Aktion vorausgesetzt wird. Das Signalisieren des Eintretens oder Nichteintretens der Bedingung wird dabei nach dem Signalisieren des Über- bzw. Unterschreitens eines Schwellwertes durchgeführt. Durch die Zuordnung einer Bedingung zu mindestens einem Schwellwert ist damit die Beeinflussung des Antwortverhaltens von weiteren Parametern und damit die gezielte Abstimmung auf die Bedürfnisse eines Nutzers möglich.

Dies gilt insbesondere dann, wenn die Höhe des vorausbezahlten Guthabens des Nutzers und/oder der gebuchte Dienstumfang und/oder der gerade in Anspruch genommene Dienst Teil einer Bedingung ist. Wird z. B. bei einem vorausbezahlten Guthaben von DM 100,00 und einem gebuchten Dienstumfang von Telefondienst (Ausland, Inland), Voice-Mail (Anrufbeantworterfunktion) und SMS sowie einer gerade in Anspruch genommenen Ferngesprächsverbindung ein oberer Schwellwert von DM 15,00 unterschritten, so wird zunächst die Aktion des Änderns von Dienstparametern, z. B. die Einschränkung der Voice-Mail-Kapazität, ausgelöst. Nimmt der Nutzer dagegen bei Unterschreiten dieses Schwellwertes nur eine Ortsverbindung in Anspruch, wird zunächst keine Aktion ausgelöst.

Bevorzugt wird der Nutzer bei Unterschreiten eines Schwellwertes und dem dadurch signalisierten Auslösen einer Aktion in Ansprechen auf das Signal über den Status des Guthabens und/oder des aktuell für ihn gültigen Dienstumfanges benachrichtigt. Im vorgehend beschriebenen Beispiel kann der Nutzer der Ferngesprächsverbindung zusätzlich darauf hingewiesen werden, daß sein elektronisches Guthaben nunmehr DM 15,00 beträgt und der Dienstumfang zugunsten der von ihm genutzten Verbindung, also die Kapazität seiner Voice-Mail, eingeschränkt wurde. Damit erhält der Nutzer rechtzeitig einen Hinweis zur Wiederaufladung seines elektronischen Guthabens.

Zur Administration eines derartigen Verfahrens ist es auf Seiten des Dienstleisters von Vorteil, daß alle Schwellwerte, Aktionen und Bedingungen für eine Mehrzahl von Nutzern an einem zentralen Punkt eines Rechnernetzwerkes verwaltet werden. Eine solche zentrale Verwaltung der Dienstdaten ist wenig personalintensiv und ermöglicht einen entsprechend guten Überblick über Wirtschaftlichkeit und Status des Betriebes sowie auch statistische Erhebungen zum Nutzerverhalten. Zur Unterstützung des erfindungsgemäßen Verfahrens ist insbesondere eine auf einem zentralen Server eines Daten- und Kommunikationsnetzwerkes betriebene Software geeignet.

Das Schwellwertverhalten von vorausbezahlten Diensten läßt sich durch Einstellen einer Anzahl von Schwellwerten, welche jeweils mindestens eine Aktion auslösen, weiter differenzieren. Es ist möglich, die Schwellwerte so zu staffeln, daß die bei Unter- bzw. Überschreiten dieser Schwellwerte ausgelösten Aktionen den Dienstumfang und die Dienstparameter schrittweise einschränken oder, bei Aufstockung des elektronischen Guthabens durch den Nutzer, wieder erweitern. Die bei gestaffelten Schwellwerten ausgelösten Aktionen können z. B. die Einschränkung von möglichen Telefonverbindungen auf das Ortsnetz, das gleichzeitige Deaktivieren der SMS-Funktion bei gleichzeitiger Änderung der Grundgebühren bewirken.

Darüber hinaus ist es auch möglich, einer Mehrzahl von Schwellwerten jeweils mindestens eine Bedingung zuzuordnen. Dabei kann eine Staffelung der Schwellwerte ebenfalls in der Art erfolgen, daß durch die diesen zugeordnete mindestens eine Bedingung eine stufenweise Einschränkung bzw. Erweiterung bei Unter- bzw. Überschreiten einzelner Schwellwerte möglich ist. So kann z. B. der Internetzugang über ein WAP-Handy beim Unterschreiten eines Schwellwertes von DM 10,00 deaktiviert werden, mittels einer weiteren diesem Schwellwert zugeordneten Bedingung in Abhängigkeit von dem ursprünglich vorausbezahlten Guthaben und bei Deaktivierung des Internetzuganges aber ein SMS-Dienst aktiviert werden.

Die erwähnte Staffelung kann insbesondere unter dem Gesichtspunkt vorgenommen werden, daß der Nutzer rechtzeitig über den aktuellen Umfang der von ihm nutzbaren Dienste sowie seines verfügbaren Guthabens informiert wird, ohne daß so gleich eine komplette Sperrung des Anschlusses erfolgt. Dadurch wird ihm eine frühzeitige und differenzierte Aufstockung seines Guthabenstandes ermöglicht, wodurch sich auch das durchschnittlich auf dem Konto des Nutzers verfügbare Guthaben erhöht. Für den Dienstleistungsbetreiber läßt sich dadurch die Qualität des Angebotes bei gleichzeitig günstigeren Preisen weiter steigern.

Die vorliegende Erfindung wird nachfolgend anhand einiger Grafiken näher erläutert. Es zeigen:
Fig. 1 den funktionalen Zusammenhang zwischen den Schwellwerten eines elektronischen Guthabens und den bei Unter- bzw. Überschreiten dieser Schwellwerte ausgelösten Diensten,
Fig. 2 den funktionalen Zusammenhang zwischen den Schwellwerten eines elektronischen Guthabens und den bei Unter- bzw. Überschreiten dieser Schwellwerte ausgelösten Diensten anhand eines Dienstbeispieles und des zugeordneten Dienstservers und
Fig. 3 eine Gebührentabelle eines Tarifes einer Telefonkarte (Prepaid-Karte) nach dem Stand der Technik.

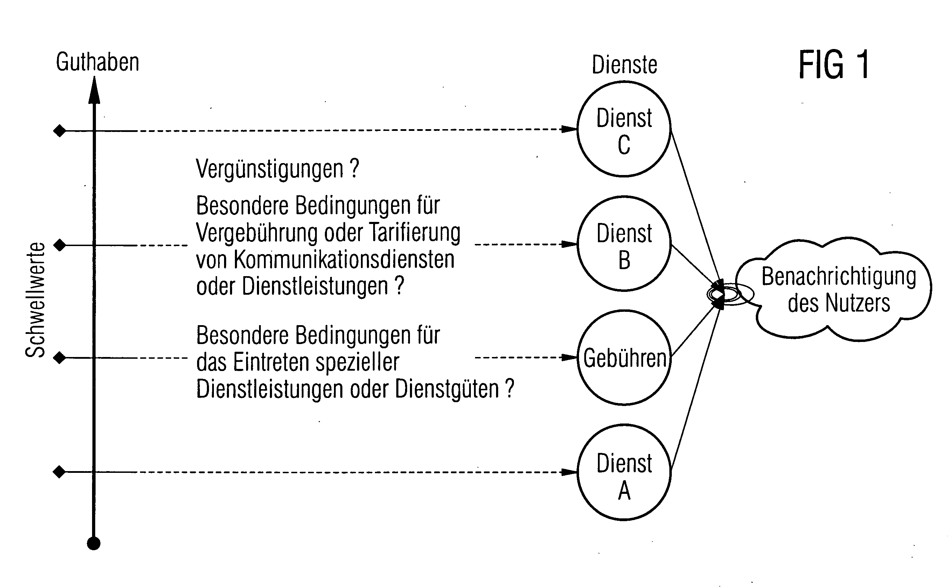

In Fig. 1 ist auf der linken Seite eine Skala von Schwellwerten für ein elektronisches Guthaben zu erkennen, bei deren Über- bzw. Unterschreiten die strichpunktiert rechts daneben zu erkennenden Dienste ausgelöst werden. Dabei können grundsätzlich jedem Schwellwert Vergünstigungen in Form einer entsprechenden Vergebührung und/oder Tarifierung und/oder Dienstgüte zugeordnet sein. Treten entsprechende Vergünstigungen in Kraft, werden diese durch den rechts aufgeführten Gebührendienst eingestellt und in einem weiteren Schritt an den Nutzer benachrichtigt.

Gleichzeitig können den Schwellwerten besondere Bedingungen für die Vergebührung oder Tarifierung von Kommunikationsdiensten oder Dienstleistungen zugeordnet sein. Eine zugeordnete Bedingung könnte z. B. so aussehen, daß in Abhängigkeit eines vorausbezahlten Guthabens von DM 50,00 und gleichzeitigem Unterschreiten der Schwelle die Aktivierung des Gebührendienstes ausgelöst wird, welcher die Zugrundelegung einer erhöhten Gebühr zur Abrechnung einer Dienstleistung auslöst. Wurde im Gegensatz dazu ein vorausbezahltes Guthaben von DM 100,00 bezahlt, wird bei Unterschreiten des gleichen Schwellwertes aber noch keine Aktion ausgelöst. Somit wird über die Zuordnung von Bedingungen zu einzelnen Schwellwerten z. B. die Tarifierung durch Auslösung oder Nichtauslösung von Aktionen gezielt beeinflußt.

Weiterhin können besondere Bedingungen für das Eintreten spezieller Dienstleistungen oder Dienstgüten formuliert sein, welche bei Unter- bzw. Überschreiten eines Schwellwertes die Aktivierung bzw. Deaktivierung eines Dienstes auslösen. So kann bei Unterschreiten des obersten Schwellwertes und einem im Voraus bezahlten Guthaben von DM 100,00 die Dienstgüte eines Dienstes, z. B. die Möglichkeit von Auslandsverbindungen, deaktiviert werden, bei einem vorausbezahlten Guthaben von DM 50,00 aber bei dem gleichen Schwellwert bereits der Telefondienst komplett gesperrt werden. Bei dem hier gezeigten Funktionszusammenhang wird der Nutzer z. B. über den Stand des Guthabens und über den Umfang der für ihn aktuell nutzbaren Dienste benachrichtigt.

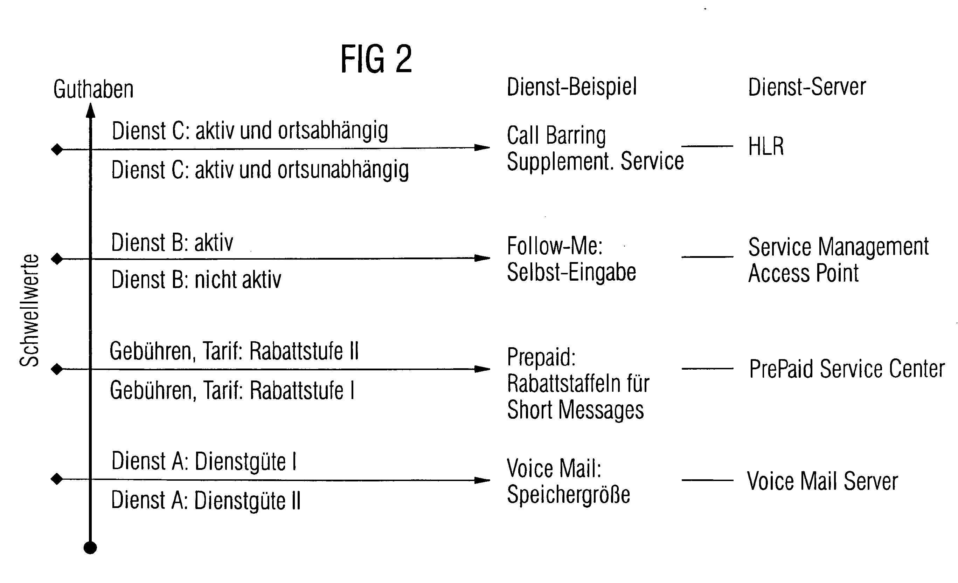

Fig. 2 zeigt den funktionalen Zusammenhang zwischen einer Schwellwertskala eines elektronischen Guthabens und den dabei aktivierten oder deaktivierten Diensten anhand von Dienstbeispielen und den zugeordneten Dienstservern.

Sinkt z. B. das elektronische Guthaben unter den höchsten Schwellwert, wird ein zuvor aktiver und ortsabhängig geschalteter Dienst C in einen aktiven und ortsunabhängigen Zustand geschaltet. Dies geschieht im vorliegenden Beispiel durch Setzen einer Anrufsperre bei gleichzeitigem Anbieten eines ortsunabhängig arbeitenden ergänzenden Dienstes. Beide Dienste laufen auf dem Dienstserver HLR (Home Location Register). Wird die nächstfolgende Schwelle unterschritten, so wird ein zuvor aktivierter Dienst B auf nicht aktiv gesetzt. Im vorliegenden Beispiel wird damit ein sprachgeführter Menüdialog durch die Selbsteingabe der entsprechenden Ziffern ersetzt. Betroffen ist hiervon der Dienstserver Service Management Access Point.

Bei weiterem Absinken des elektronischen Guthabens unter die nächstfolgende Schwelle wird ein Gebührendienst aktiviert, welcher den Tarif für SMS-Nachrichten (Short Message Services) von einer Rabattstufe II auf eine Rabattstufe I setzt. Dabei tritt eine weniger günstige Rabattierung für SMS im Sinne einer Rabattstaffel für vorausbezahlte Dienste in Aktion. Dieser Dienst wird auf dem Dienstserver Prepaid Service Center aktiviert. Unterschreitet das Guthaben schließlich den niedrigsten Schwellwert, wird ein Dienst A aktiviert, welcher eine Dienstgüte I auf eine Dienstgüte II ändert, wodurch die Speichergröße der Voice-Mail (Anrufbeantworterfunktion) verringert wird. Der Dienst A wird dabei auf dem Dienstserver Voice-Mail Server gestartet.

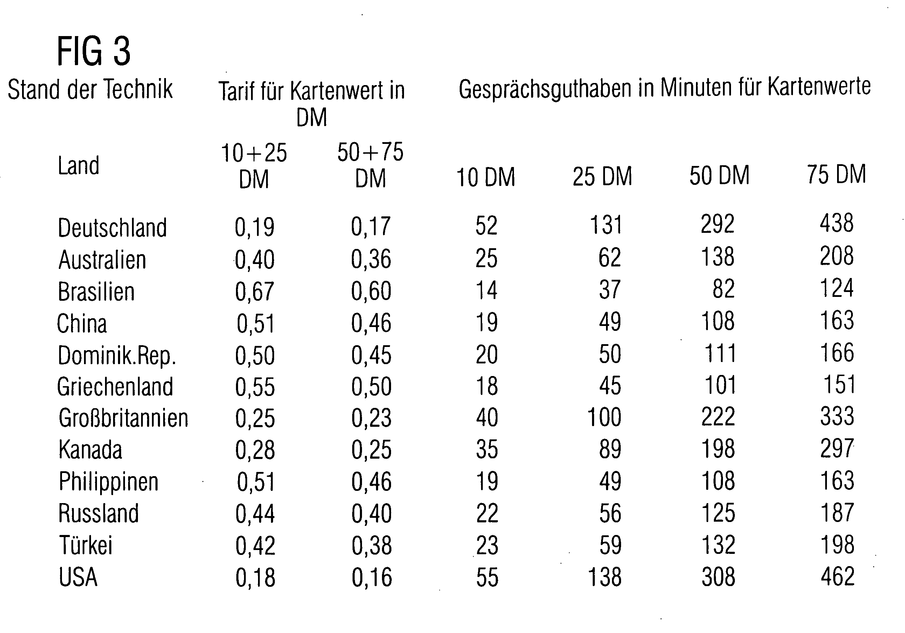

Fig. 3 zeigt eine Gebührentafel für Telefonverbindungen gemäß einem speziellen Tarifangebot für Kartenwerte von DM 10,00 und DM 25,00 sowie DM 50,00 und DM 75,00. Gleichzeitig werden die Gesprächsguthaben in Minuten für die entsprechenden Kartenwerte in Abhängigkeit von der Verbindung aufgelistet. Bei geringeren Kartenwerten (Prepaid-Karte) von z. B. DM 10,00 und DM 25,00 werden entsprechend höhere Gebühren für die Gesprächsminuten veranschlagt als bei Kartenwerten von DM 50,00 und DM 75,00. Entsprechend geringer sind bei den Kartenwerten von DM 10,00 und DM 25,00 die Verbindungszeiten in die entsprechenden Länder. Schwellwerte zur differenzierten Reaktion auf die Erreichung eines Minimalguthabensstandes sind bei diesem Tarif im Stand der Technik nicht vorgesehen.

An dieser Stelle sei darauf hingewiesen, daß alle oben beschriebenen Schritte des Verfahrens für sich allein gesehen und in jeder Kombination, insbesondere auch die in den Zeichnungen dargestellten Details als erfindungswesentlich beansprucht werden. Abänderungen hiervon sind dem Fachmann geläufig.

## Patentansprüche

1. Verfahren zur schwellwertbezogenen Steuerung mindestens eines Dienstes in einem Daten- bzw. Telekommunikationssystem, mit folgenden Verfahrensschritten:
a) Einstellen mindestens eines Schwellwertes für ein vorausbezahltes Guthaben zur Vergütung des Dienstes;
b) Einstellen mindestens einer Aktion, insbesondere einer Steuerung des Dienstumfanges, im Rahmen des Dienstes, welche bei diesem Schwellwert ausgelöst werden soll;
c) Signalisieren des Über- bzw. Unterschreitens des oder eines Schwellwertes; und
d) Auslösen der Aktion in Ansprechen auf das Signal.

2. Verfahren nach Anspruch 1,
**dadurch gekennzeichnet, daß**
die Aktion das Aktivieren oder Deaktivieren des oder eines Dienstes umfasst.

3. Verfahren nach Anspruch 1 oder 2,
**dadurch gekennzeichnet, daß**
die Aktion das Ändern von Dienstparametern, insbesondere der Vergebührung, der Tarifierung oder der Dienstgüte, umfasst.

4. Verfahren nach einem der vorhergehenden Ansprüchen,
**dadurch gekennzeichnet, daß**
in Schritt a) die Wahl des Schwellwertes in Abhängigkeit von Nutzerdaten, insbesondere des vom Nutzer gebuchten Dienstumfangs und/oder der Höhe des vorausbezahlten Guthabens, erfolgt.

5. Verfahren nach einem der vorhergehenden Ansprüche,
**dadurch gekennzeichnet, daß**
in Schritt b) die Wahl der Aktion in Abhängigkeit von Nutzerdaten, insbesondere des vom Nutzer gebuchten Dienstumfangs und/oder des vorausbezahlten Guthabens, erfolgt.

6. Verfahren nach einem der vorhergehenden Ansprüche,
**gekennzeichnet durch**
einen weiteren nach dem Schritt b) durchzuführenden Verfahrensschritt
b1) Einstellen einer zusätzlichen Bedingung für die Aktion; und
einen weiteren nach dem Schritt c) durchzuführenden Verfahrensschritt
c1) Signalisieren des Eintretens oder Nicht-Eintretens der Bedingung.

7. Verfahren nach Anspruch 7,
**dadurch gekennzeichnet, daß**
in Schritt b1) die Höhe des vorausbezahlten Guthabens des Nutzers und/oder der gebuchte Dienstumfang und/oder der aktuell in Anspruch genommene Dienst, Teil einer Bedingung ist.

8. Verfahren nach einem der vorhergehenden Ansprüche,
**gekennzeichnet durch**
einen weiteren nach dem Schritt d) durchzuführenden Verfahrensschritt
e) Benachrichtigen des Nutzers über den Status des Guthabens und/oder des aktuell für ihn gültigen Dienstumfanges.

9. Verfahren nach einem der vorhergehenden Ansprüche,
**dadurch gekennzeichnet, daß**
alle Schwellwerte, Aktionen und Bedingungen für eine Mehrzahl von Nutzern an einem zentralen Punkt eines Rechner-Netzwerkes verwaltet werden.

10. Verfahren nach einem der vorhergehenden Ansprüche,
**gekennzeichnet durch**
eine Mehrzahl von Schwellwerten, welche jeweils mindestens eine Aktion auslösen.

11. Verfahren nach einem der vorhergehenden Ansprüche,
**gekennzeichnet durch**
eine Mehrzahl von Schwellwerten, welchen jeweils mindestens eine Bedingung zugeordnet ist.

12. Verfahren nach Anspruch 10 oder 11,
**gekennzeichnet durch**
eine Zuordnung der Aktionen und/oder der Bedingungen zu den Schwellwerten derart, daß bei Über- bzw. Unterschreiten aufeinanderfolgender Schwellwerte eine stufenweise Einschränkung oder Ausweitung des Dienstumfanges erfolgt.
